(19) Europäisches Patentamt
European Patent Office
Office européen des brevets

(11) **EP 1 834 991 A1**

(12) **EUROPEAN PATENT APPLICATION**
published in accordance with Art. 158(3) EPC

(43) Date of publication:
**19.09.2007 Bulletin 2007/38**

(51) Int Cl.:
***C08L 51/00*** *(2006.01)*

(21) Application number: **05816770.1**

(22) Date of filing: **13.12.2005**

(86) International application number:
**PCT/JP2005/022817**

(87) International publication number:
**WO 2006/070591 (06.07.2006 Gazette 2006/27)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **27.12.2004 JP 2004375967
27.01.2005 JP 2005019501**

(71) Applicant: **Kaneka Corporation
Kita-ku
Osaka-shi, Osaka 530-8288 (JP)**

(72) Inventor: **UEDA, Takashi
6750301 Hyogo (JP)**

(74) Representative: **Vossius & Partner
Siebertstrasse 4
81675 München (DE)**

(54) **AGGREGATED-PARTICLE COMPOSITION**

(57) An object of the present invention is to provide a new coagulated particle composition that can be recovered as a coagulated particle composition having an extremely low fine particle content, an extremely low coarse particle content, and satisfactory powder properties such as blocking resistance and powder flowability, without deteriorating the original quality of the polymer itself, for example, the effect of improving impact resistance. A coagulated particle composition includes a graft polymer (A) containing at least one flexible polymer phase and at least one rigid polymer phase, wherein the outermost part includes the rigid polymer phase; a water-soluble polymer compound (B) having a physical gel-forming property; and a gelling agent (C) therefor, wherein the content of the water-soluble polymer compound (B) having the physical gel-forming property is 0.01 to 3.0 parts by weight relative to 100 parts by weight of the graft polymer (A) and the ratio of the rigid polymer phase serving as the outermost part in the graft polymer (A) is 0.5 to 10 percent by weight.

**EP 1 834 991 A1**

**Description**

Technical Field

The present invention relates to a coagulated particle composition of a graft polymer. In more detail, the present invention relates to a coagulated particle composition of a graft polymer having excellent quality such as impact resistance and blocking resistance.

Background Art

Graft polymers produced by emulsion polymerization or suspension polymerization have been widely used, for example, in order to improve the impact resistance of thermoplastic resins. For example, it is known that a diene or an acrylate graft polymer is mixed in vinyl chloride resins (for example, see Patent Document 1).
In general, in the field of graft polymers for improving impact resistance of thermoplastic resins or thermosetting resins, the content of the graft polymers is preferably as small as possible in view of the quality and the cost. Studies for improving this point have been carried out for many years (for example, see Patent Documents 2 to 4).
Various processes of improving the effect of imparting impact resistance to thermoplastic resins or thermosetting resins by graft polymer are known. It is known that, among these, processes of improving the quality and increasing the content of a flexible component in a graft polymer, for example, a process of decreasing the glass transition temperature of a flexible polymer phase in a graft polymer and a process of increasing the ratio by weight of a flexible polymer phase in a graft polymer, are effective to achieve the object.
However, although the use of the above processes improves the effect of imparting impact resistance by a graft polymer, coagulated particles of the graft polymer become sticky and thus the handleability as a resin powder tends to be extremely impaired. Accordingly, both the improved impact resistance and maintenance of satisfactory handleability of the powder, which are conflicting physical properties, must be industrially satisfied. The problem is how these physical properties can be balanced at high level.
As a process for recovering a sticky rubbery polymer latex as a resin powder having low stickiness, a process of adding a high-molecular-weight polyanion having a carboxyl group and/or a hydroxyl group in its molecule to a rubber latex, and adding dropwise the mixed latex to an aqueous solution containing at least one alkaline earth metal is also known (for example, see Patent Document 5).
However, according to the description of this process, unless at least 2 to 8 parts by weight and preferably 4 to 6 parts by weight of the high-molecular-weight polyanion are added relative to 100 parts by weight of rubber solid component in the rubber latex, the stickiness of the recovered resin powder cannot be suppressed. In general, it can be easily assumed that when 4 parts by weight or more of a foreign matter (i.e., in this case, the high-molecular-weight polyanion) is added to a polymer latex, the original quality of the recovered polymer composition itself usable for various purposes is impaired. In particular, when the above process is applied to a graft polymer whose content is desirably reduced as much as possible in order to impart impact resistance to thermoplastic resins or the like, the quality, for example, the effect of imparting impact resistance, is inevitably degraded. Therefore, the above process is not a satisfactory process.
In other words, under the present situation, in the field of graft polymers that can be used for the purpose of improving impact resistance of thermoplastic resins or the like, the development of a coagulated particle composition capable of satisfying both the quality such as the improved impact resistance and the handleability of the powder, which are conflicting physical properties, at high level has been awaited.

Patent Document 1: Japanese Examined Patent Application Publication No. 39-19035
Patent Document 2: Japanese Examined Patent Application Publication No. 42-22541
Patent Document 3: Japanese Unexamined Patent Application Publication No. 2-1763
Patent Document 4: Japanese Unexamined Patent Application Publication No. 8-100095
Patent Document 5: Japanese Unexamined Patent Application Publication No. 52-37987

Disclosure of Invention

Problems to be Solved by the Invention

In order to provide a solution to the above problems, it is an object of the present invention to provide a novel coagulated particle composition of a graft polymer capable of satisfying both the quality such as the improved impact resistance and the handleability of the powder, which are conflicting physical properties, at high level.

Means for Solving the Problems

In view of the above present situation, the present inventors have conducted intensive research and found that a coagulated particle composition containing a specific amount of a specific graft polymer (A), a specific amount of a water-soluble polymer compound (B) having a physical gel-forming property, and a specific amount of a gelling agent (C) therefor can satisfy both the quality such as the improved impact resistance and the handleability of the powder, which are conflicting physical properties, at high level. Consequently, the present invention has been accomplished.

The present invention relates to a coagulated particle composition including a graft polymer (A) containing at least one flexible polymer phase and at least one rigid polymer phase, wherein the outermost part of the graft polymer (A) includes the rigid polymer phase; a water-soluble polymer compound (B) having a physical gel-forming property; and a gelling agent (C) therefor, wherein the content of the water-soluble polymer compound (B) having the physical gel-forming property is 0.01 to 3.0 parts by weight relative to 100 parts by weight of the graft polymer (A) and the content of the rigid polymer phase serving as the outermost part in the graft polymer (A) is 0.5 to 10 percent by weight.

A preferred embodiment relates to the above-described coagulated particle composition further including 0.05 to 3.0 parts by weight of an anti-blocking agent (D) relative to 100 parts by weight of the graft polymer (A).

A preferred embodiment relates to the coagulated particle composition described in any one of the above, wherein the content of the water-soluble polymer compound (B) having the physical gel-forming property is 0.05 to 1.8 parts by weight relative to 100 parts by weight of the graft polymer (A).

A preferred embodiment relates to the coagulated particle composition described in any one of the above, wherein the total content of the water-soluble polymer compound (B) having the physical gel-forming property and the anti-blocking agent (D) is 0.1 to 3.0 parts by weight relative to 100 parts by weight of the graft polymer (A).

A preferred embodiment relates to the coagulated particle composition described in any one of the above, wherein the total content of the water-soluble polymer compound (B) having the physical gel-forming property and the anti-blocking agent (D) is 0.5 to 2.0 parts by weight relative to 100 parts by weight of the graft polymer (A).

A preferred embodiment relates to the coagulated particle composition described in any one of the above, wherein the water-soluble polymer compound (B) having the physical gel-forming property is at least one compound selected from hydroxyethylmethylcellulose, hydroxypropylmethylcellulose, carboxymethylcellulose, water-soluble alginic acid derivatives, agar, gelatin, carrageenan, glucomannan, pectin, curdlan, gellan gum, and polyacrylic acid derivatives.

A preferred embodiment relates to the coagulated particle composition described in any one of the above, wherein the anti-blocking agent (D) is a polyvalent metal salt of an anionic surfactant.

A preferred embodiment relates to the coagulated particle composition described in any one of the above, wherein the anti-blocking agent (D) includes 10 to 100 percent by weight of a crosslinked polymer prepared by polymerizing 30 to 60 percent by weight of methyl methacrylate, 65 to 35 percent by weight an aromatic vinyl monomer, 0.1 to 25 percent by weight of a crosslinkable monomer, and 0 to 30 percent by weight of another copolymerizable monomer and 0 to 90 percent by weight of a lubricant.

A preferred embodiment relates to the above-described coagulated particle composition, wherein the water-soluble polymer compound (B) having the physical gel-forming property is a water-soluble alginic acid derivative.

A preferred embodiment relates to the coagulated particle composition described in any one of the above, wherein the gelling agent (C) is an inorganic salt and/or an acid.

A preferred embodiment relates to the coagulated particle composition described in any one of the above, wherein the graft polymer (A) includes a flexible polymer phase serving as an inner layer and a rigid polymer phase serving as an outer layer.

A preferred embodiment relates to the coagulated particle composition described in any one of the above, wherein the graft polymer (A) includes a rigid polymer phase serving as the innermost layer, a flexible polymer phase serving as an interlayer, and a rigid polymer phase serving as the outermost layer.

A preferred embodiment relates to the coagulated particle composition described in any one of the above, wherein the flexible polymer phase in the graft polymer (A) is a flexible polymer phase prepared by polymerizing 50 to 100 percent by weight of an acrylate ester, 0 to 40 percent by weight of an aromatic vinyl monomer, 0 to 10 percent by weight of a vinyl monomer copolymerizable with the acrylate ester and the aromatic vinyl monomer, and 0 to 5 percent by weight of a multifunctional monomer, the flexible polymer phase having a volume-average particle size of 0.01 to 15.0 $\mu$m and a glass transition temperature of lower than 20°C.

A preferred embodiment relates to the coagulated particle composition described in any one of the above, wherein the flexible polymer phase in the graft polymer (A) is a flexible polymer phase prepared by polymerizing 50 to 100 percent by weight of butadiene, 0 to 40 percent by weight of an aromatic vinyl monomer, 0 to 10 percent by weight of a vinyl monomer copolymerizable with butadiene and the aromatic vinyl monomer, and 0 to 5 percent by weight of a multifunctional monomer, the flexible polymer phase having a volume-average particle size of 0.01 to 15.0 $\mu$m and a glass transition temperature of lower than 20°C.

A preferred embodiment relates to the coagulated particle composition described in any one of the above, wherein the rigid polymer phase serving as the outermost part in the graft polymer (A) is a rigid polymer phase prepared by polymerizing a monomeric mixture containing 0 to 100 percent by weight of a (meth)acrylate ester, 0 to 90 percent by weight of an aromatic vinyl monomer, 0 to 25 percent by weight of a vinyl cyanide monomer, and 0 to 20 percent by weight of a vinyl monomer copolymerizable with the (meth)acrylate ester, the aromatic vinyl monomer, and the vinyl cyanide monomer, the rigid polymer phase having a glass transition temperature of 20°C or higher.

Effects of the Invention

The coagulated particle composition of the present invention can satisfy both the quality such as the effect of improving impact resistance of thermoplastic resins or thermosetting resins and the handleability of the powder, which are conflicting physical properties, at high level. Best Mode for Carrying Out the Invention

A graft polymer (A) of the present invention contains at least one flexible polymer phase and at least one rigid polymer phase. For example, graft polymers produced by emulsion polymerization, suspension polymerization, microsuspension polymerization, miniemulsion polymerization, or aqueous dispersion polymerization can be used. Among these, from the viewpoint that both physical properties relating to the quality such as the effect of improving impact resistance of thermoplastic resins or the like and the handleability of the powder can be satisfied at high level and the structure control is easily performed, graft polymers produced by emulsion polymerization or suspension polymerization are preferably used.

In the present invention, the term "flexible" in the flexible polymer phase means that the glass transition temperature of the polymer is lower than 20°C. From the viewpoint described below, the glass transition temperature of the flexible polymer is preferably lower than 0°C and more preferably lower than -20°C. In the case where the glass transition temperature of the flexible polymer is 20°C or higher, when the coagulated particle composition of the present invention is used as an impact modifier of, for example, a thermoplastic resin such as a vinyl chloride resin, the ability of impact absorption of the flexible polymer component is decreased and it tends to be difficult to achieve a significant effect of improving impact resistance.

On the other hand, in the present invention, the term "rigid" in the rigid polymer phase means that the glass transition temperature of the polymer is 20°C or higher. From the viewpoint described below, the glass transition temperature of the rigid polymer is preferably 30°C or higher and more preferably 50°C or higher. In the case where the glass transition temperature of the rigid polymer is lower than 20°C, when the coagulated particles of the present invention is used as an impact modifier of, for example, a thermoplastic resin such as a vinyl chloride resin, the compatibility with the thermoplastic resin is decreased. Consequently, a significant effect of improving impact resistance tends to be difficult to exhibit and the handleability of the powder may be adversely affected.

The glass transition temperature of polymers may be measured with a differential scanning calorimeter or the like. However, values calculated with the Fox equation using values described in Polymer Handbook (J. Brandrup Interscience, 1989) are used in the present invention. For example, the glass transition temperature of poly(methyl methacrylate) is 105°C and that of poly(butyl acrylate) is -54°C.

The flexible polymer phase and the rigid polymer phase in the graft polymer (A) of the present invention are not particularly limited as long as at least the outermost part includes a rigid polymer phase. Specific preferred examples include multilayer structured-graft polymers such as a graft polymer including a flexible polymer phase serving as an inner layer and a rigid polymer phase serving as an outer layer (the outermost part), and a graft polymer including a rigid polymer phase serving as the innermost layer, a flexible polymer phase serving as an interlayer, and a rigid polymer phase serving as the outermost layer (the outermost part). These may be appropriately used alone or in combinations of two or more of the graft polymers.

With respect to the above multilayer structured-graft polymers, for example, graft polymers having the former structure will be described. A layer structure in which the rigid polymer serving as the outer layer entirely covers the flexible polymer phase serving as the inner layer is generally used. However, depending on the ratio by weight or the like of the flexible polymer phase and the rigid polymer phase, the amount of rigid polymer for forming the layer structure may be insufficient. In such a case, the graft polymer need not have a complete layer structure. A structure in which the rigid polymer phase serving as the outermost part covers a part of the flexible polymer phase and a structure in which the rigid polymer serving as the outermost part is graft-polymerized on a part of the flexible polymer phase are also preferably used. The same can be applied to graft polymers having the latter structure.

The flexible polymer phase in the graft polymer (A) is not particularly limited. From the viewpoint described below, preferred examples thereof include (1) a flexible polymer prepared by polymerizing 50 to 100 percent by weight of an acrylate ester, 0 to 40 percent by weight of an aromatic vinyl monomer, 0 to 10 percent by weight of a vinyl monomer copolymerizable with the acrylate ester and the aromatic vinyl monomer, and 0 to 5 percent by weight of a multifunctional monomer, the flexible polymer having a volume-average particle size of 0.01 to 15.0 μm and a glass transition temperature of lower than 20°C and (2) a flexible polymer prepared by polymerizing 50 to 100 percent by weight of butadiene, 0 to 40 percent by weight of an aromatic vinyl monomer, 0 to 10 percent by weight of a vinyl monomer copolymerizable with butadiene and the aromatic vinyl monomer, and 0 to 5 percent by weight of a multifunctional monomer, the flexible polymer having a volume-average particle size of 0.01 to 15.0 μm and a glass transition temperature of lower than 20°C.

On the other hand, the rigid polymer phase serving as the outermost part of the graft polymer (A) is not particularly limited. From the viewpoint described below, a preferred example thereof is a rigid polymer prepared by polymerizing a monomeric mixture containing 0 to 100 percent by weight of a (meth)acrylate ester, 0 to 90 percent by weight of an aromatic vinyl monomer, 0 to 25 percent by weight of a vinyl cyanide monomer, and 0 to 20 percent by weight of a vinyl monomer copolymerizable with the (meth)acrylate ester, the aromatic vinyl monomer, and the vinyl cyanide monomer, the rigid polymer having a glass transition temperature of 20°C or higher. In the present invention, the term "(meth) acrylic" means acrylic and/or methacrylic.

For example, when the graft polymer (A) includes a rigid polymer phase serving as the innermost layer, a flexible polymer phase serving as an interlayer, and a rigid polymer phase serving as the outermost layer, a preferred example of the rigid polymer phase (in this case, the innermost layer) that does not serve as the outermost part is a rigid polymer composed of 40 to 100 percent by weight of an methacrylate ester, 0 to 60 percent by weight of an acrylate ester, 0 to 60 percent by weight of an aromatic vinyl monomer, 0 to 10 percent by weight of a multifunctional monomer, and 0 to 20 percent by weight of a vinyl monomer copolymerizable with the methacrylate ester, the acrylate ester, and the aromatic vinyl monomer.

Typical processes for producing the above graft polymers are described in detail in, for example, Japanese Unexamined Patent Application Publication Nos. 2002-363372, 2003-119396, and 9-286830, but are not limited to these.

The reason that the above-described graft polymers are preferably used is as follows: These graft polymers have been widely used as an impact modifier for thermoplastic resins such as vinyl chloride resins (hereinafter also referred to as PVC) and (meth)acrylic resins and thermosetting resins such as epoxy resins. Accordingly, a composition having excellent quality such as impact resistance and handleability of a powder can be produced even when the graft polymer of the present invention is recovered as a coagulated particle composition.

However, the graft polymer usable in the present invention is not limited to the above polymers. For example, polymers prepared by copolymerization or graft polymerization of a monomeric composition mainly composed of at least one monomer selected from the following monomer group may be used alone or as a mixture for the flexible polymer and the rigid polymer.

Examples of the monomer group include (1) alkyl acrylates containing an alkyl group having up to 10 carbon atoms, for example, methyl acrylate, ethyl acrylate, butyl acrylate, and 2-ethylhexyl acrylate; (2) alkyl methacrylates containing an alkyl group having up to 10 carbon atoms, for example, methyl methacrylate, ethyl methacrylate, butyl methacrylate, and 2-ethylhexyl methacrylate; (3) vinylarenes such as styrene, α-methylstyrene, monochlorostyrene, and dichlorostyrene; (4) vinylcarboxylic acids such as acrylic acid and methacrylic acid; (5) vinyl cyanides such as acrylonitrile and methacrylonitrile; (6) vinyl halides such as vinyl chloride, vinyl bromide, and chloroprene; (7) vinyl acetate; (8) alkenes such as ethylene, propylene, butylene, butadiene, and isobutylene; and (9) multifunctional monomers such as allyl methacrylate, diallyl phthalate, triallyl cyanurate, monoethylene glycol dimethacrylate, tetraethylene glycol dimethacrylate, divinylbenzene, and glycidyl methacrylate.

The ratio by weight of the flexible polymer phase/ the rigid polymer phase in the graft polymer (A) in the present invention is not particularly limited. The ratio of the rigid polymer phase of the outermost part in the graft polymer (A) is preferably 0.5 to 10 percent by weight and more preferably 1 to 9 percent by weight. When the ratio by weight of the rigid polymer phase of the outermost part in the graft polymer (A) exceeds 10 percent by weight, the blocking resistance of the coagulated particle composition of the present invention is improved compared with an ordinary coagulated particle composition. However, in such a case, since the amount of the flexible polymer phase in the graft polymer is decreased, a significant effect of imparting impact resistance to thermoplastic resins or the like tends to be difficult to exhibit. On the other hand, in the case where the ratio by weight of the rigid polymer phase of the outermost part in the graft polymer (A) is less than 0.5 percent by weight, for example, when the graft polymer (A) is used as an impact modifier for thermoplastic resins such as PVC, the compatibility between the graft polymer (A) and the thermoplastic resins is decreased. Consequently, the effect of improving impact resistance tends to be difficult to exhibit. Furthermore, since the amount of the rigid polymer of the outermost part becomes insufficient, the coagulated particles of the graft polymer after recovering become excessively soft. As a result, the shape retention (i.e., elasticity) of the coagulated particles is extremely decreased and, for example, the coagulated particles easily undergo plastic deformation and blocking by a weak shear. Thus, both physical properties of the effect of imparting impact resistance and the handleability of the powder may not be satisfied at high level.

In the present invention, coagulated particles of the graft polymer (A) include a water-soluble polymer compound (B) having a physical gel-forming property. Herein, the term "physical gel" means a gel containing physical crosslinking formed by hydrogen bonds, ionic bonds, or the formation of chelates between polymer molecules. The phrase "having a physical gel-forming property" means that a change from a viscous fluid (sol) to an elastomer (gel) can be visually observed when a gelling agent such as an inorganic salt or acid is added to an aqueous solution containing only a water-soluble polymer compound. In the present invention, the term "water-soluble polymer compound (B) having a physical gel-forming property" is defined as a water-soluble polymer compound having the above property.

The water-soluble polymer compound having a physical gel-forming property usable in the present invention is not particularly limited as long as the above property can be exhibited. For example, a water-soluble polymer compound composed of a compound or a mixture containing two or more compounds selected from the following group can be used. Examples thereof include water-soluble alginic acid derivatives such as alginic acid, sodium alginate, potassium alginate, and ammonium alginate; hydroxyethylmethylcellulose; hydroxypropylmethylcellulose; carboxymethylcellulose; agar; gelatin; carrageenan; glucomannan; pectin; curdlan; gellan gum; and polyacrylic acid derivatives. In order to achieve the object of the present invention, among these, carboxymethylcellulose, water-soluble alginic acid derivatives, and polyacrylic acid derivatives are more preferable. Among these, water-soluble alginic acid derivatives are most preferably used.

The ratio between mannuronic acid and guluronic acid in the water-soluble alginic acid derivative is not particularly limited. However, a higher ratio of guluronic acid is preferable because the ability of forming a physical gel tends to increase. Therefore, the ratio of guluronic acid in the water-soluble alginic acid derivative is generally at least 5 percent by weight and more preferably at least 30 percent by weight. Also, the molecular weight of the water-soluble polymer compound represented by the above water-soluble alginic acid derivatives is not particularly limited. In view of the liquid transferring property during production, the viscosity of a 1.0 percent by weight aqueous solution measured with a B-type viscometer is preferably 2 to 22,000 mPa·s and more preferably 2 to 1,000 mPa·s.

The content of the water-soluble polymer compound (B) having the physical gel-forming property in the present invention is preferably 0.01 to 3.0 parts by weight and more preferably 0.05 to 1.8 parts by weight relative to 100 parts by weight of the graft polymer (A). When the content of the water-soluble polymer compound (B) having the physical gel-forming property is less than 0.01 parts by weight, the effect of improving the blocking resistance of coagulated particles of the graft polymer after recovering and the retention of the shape of the particles (impartation of elasticity to the coagulated particles) tends to be difficult to exhibit. On the other hand, when the content of the water-soluble polymer compound (B) having the physical gel-forming property exceeds 3.0 parts by weight, the blocking resistance of coagulated particles of the graft polymer after recovering is improved but a large amount of water-soluble polymer compound (including substances derived from the water-soluble polymer compound) remains in the coagulated particles. Consequently, the effect of imparting impact resistance and the quality, for example, thermal stability during a molding process tend to decrease.

Examples of the gelling agent (C) usable in the present invention include inorganic salts such as sodium chloride, potassium chloride, lithium chloride, sodium bromide, potassium bromide, lithium bromide, potassium iodide, lithium iodide, potassium sulfate, ammonium sulfate, sodium sulfate, ammonium chloride, sodium nitrate, potassium nitrate, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum, and iron alum; inorganic acids such as hydrochloric acid, sulfuric acid, nitric acid, and phosphoric acid; organic acids such as acetic acid and formic acid; and organic acid salts such as sodium acetate, calcium acetate, sodium formate, and calcium formate. These may be used alone or as a mixture. Among these, inorganic salts such as sodium chloride, potassium chloride, ammonium sulfate, sodium sulfate, ammonium chloride, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum, and iron alum; inorganic acids such as hydrochloric acid, sulfuric acid, nitric acid, and phosphoric acid; and organic acids such as acetic acid and formic acid can be preferably used alone or in combinations of two or more of the gelling agents.

In the present invention, when a water-soluble alginic acid derivative is used as the water-soluble polymer compound (B) having the physical gel-forming property, calcium chloride, ferrous sulfate, ferrous chloride, ferric chloride, ferric sulfate, aluminum sulfate, or the like can be suitably used as the gelling agent (C).

The amount of the gelling agent (C) added in the production of the composition of the present invention is not particularly limited but is preferably 0.2 to 20 parts by weight and more preferably 0.5 to 15 parts by weight relative to 100 parts by weight of the graft polymer (A). Preferably, most part of the gelling agent (C) can be washed away in the water washing process when the coagulated particles are recovered. Preferably, less than 1 part by weight and more preferably 0.01 to 0.5 parts by weight of the gelling agent (C) relative to 100 parts by weight of the graft polymer (A) remains. In the case where the residual amount of the gelling agent (C) relative to the graft polymer (A) exceeds 1 part by weight, for example, when the composition is mixed with a vinyl chloride resin, the processability during molding may be changed. In this case, a high impact resistance effect tends to be difficult to exhibit and, in addition, a problem such as the yellowing of moldings may be caused.

In the present invention, the purposes of adding the water-soluble polymer compound (B) having the physical gel-forming property and the gelling agent (C) therefor are as follows: (1) A non-sticky physical gel coexists in coagulated particles of the graft polymer, thereby improving the blocking resistance of the coagulated particles in the course of recovering and the retention of the shape of coagulated particles (impartation of elasticity to coagulated particles); and (2) A dried product of a non-sticky physical gel coexists in coagulated particles, thereby improving the blocking resistance of the coagulated particles and the retention of the shape of the coagulated particles (impartation of elasticity to the coagulated particles) even after the coagulated particles are dried.

Japanese Unexamined Patent Application Publication No. 52-37987 discloses a process performed under regulated conditions as a process for granulating a rubbery polymer latex that is extremely difficult to recover in a particle form. In the process, a high-molecular-weight polyanion having a carboxyl group and/or a hydroxyl group in its molecule is added to a rubber latex and the mixed latex is added dropwise to an aqueous solution containing at least one alkaline earth metal. However, according to the description of this process, at least 2.0 parts by weight and preferably 4.0 parts by weight of the high-molecular-weight polyanion must be added relative to 100 parts by weight of the polymeric solid content in the rubber latex. In other words, in this process, at least 4.0 parts by weight of the high-molecular-weight polyanion must be added in order to improve the blocking resistance of the recovered polymeric coagulated particles.

In general, it can be easily assumed that when no less than 4.0 parts by weight of a foreign matter (i.e., in this case, the high-molecular-weight polyanion) is contained in a polymer, various types of quality such as impact resistance strength and thermal stability of the original rubber polymer are impaired. As a result, it is difficult to achieve the object of the present invention, that is, to satisfy the quality (for example, the effect of improving impact resistance) and the handleability of the powder at high level.

The present invention uses the graft polymer (A) including at least one flexible polymer phase and at least one rigid polymer phase, wherein the outermost part of the graft polymer (A) includes the rigid polymer phase. Thereby, the content of the water-soluble polymer compound (B) having the physical gel-forming property, which is a foreign matter, can be set to 0.01 to 3.0 parts by weight and preferably 0.05 to 1.8 parts by weight. As a result, the handleability of the powder can be maintained at a high level without impairing the effect of improving impact resistance and the quality such as thermal stability, which are inherently possessed by the graft polymer.

According to the present invention, in a coagulated particle composition of a graft polymer, the composition containing a water-soluble polymer compound having the physical gel-forming property, 0.05 to 3.0 parts by weight, preferably 0.1 to 3.0 parts by weight, and more preferably 0.2 to 2.5 parts by weight of an anti-blocking agent (D) may be added relative to 100 parts by weight of the graft polymer (A). Thereby, it becomes possible to achieve the object of the present invention, that is, to satisfy the quality such as the effect of improving impact resistance and the handleability of the powder at high level.

The suitable content of the anti-blocking agent (D) is affected by the content of the water-soluble polymer compound (B) having the physical gel-forming property in the coagulated particles of the graft polymer (A). The total content (adding amount) of the water-soluble polymer compound (B) having the physical gel-forming property and the anti-blocking agent (D) in the coagulated particles of the graft polymer is preferably 0.06 to 6.0 parts by weight, more preferably 0.1 to 3.0 parts by weight, and particularly preferably 0.5 to 2.0 parts by weight relative to 100 parts by weight of the graft polymer (A).

When the total content (adding amount) of the water-soluble polymer compound (B) having the physical gel-forming property and the anti-blocking agent (D) in coagulated particles of the graft polymer is less than 0.06 parts by weight, the blocking resistance of the coagulated particles after recovering may be deteriorated. When the total content (adding amount) exceeds 6.0 parts by weight, the quality such as the effect of improving impact resistance tends to decrease.

In the present invention, both the water-soluble polymer compound (B) having the physical gel-forming property and the anti-blocking agent (D) are simultaneously contained (combined). Thereby, the content of a foreign matter in the coagulated particles after recovering can also be set to 2.0 parts by weight or less in an ordinary case. Consequently, it becomes possible to satisfy the quality such as the effect of improving impact resistance, which is inherently possessed by the graft polymer, and the handleability of the powder at high level.

The anti-blocking agent (D) usable in the present invention is not particularly limited. From the viewpoint that the quality such as the effect of improving impact resistance and the handleability of the powder can be satisfied at higher level, for example, a polyvalent metal salt of an anionic surfactant and/or a crosslinked polymer can be suitably used. When a crosslinked polymer is used, the crosslinked polymer may be used together with a lubricant, which is an optional component. Ten to 100 percent by weight of the crosslinked polymer and 0 to 90 percent by weight of the lubricant and preferably 50 to 100 percent by weight of the crosslinked polymer and 0 to 50 percent by weight of the lubricant may be used.

Examples of the polyvalent metal salt of the anionic surfactant that can be used for the above purpose include polyvalent metal salts of an anionic surfactant such as fatty acid salts, sulfuric esters of higher alcohols, sulfuric ester salts of liquid fatty oil, sulfates of aliphatic amines or aliphatic amides, phosphoric esters of aliphatic alcohols, sulfonates of dibasic fatty acid esters, sulfonates of aliphatic amides, alkylallyl sulfonates, and formalin condensates of naphthalene sulfonates. Among these, fatty acid salts, sulfuric esters of higher alcohols, and sulfonates of dibasic fatty acid esters can be suitably used from the viewpoint that the quality such as the effect of improving impact resistance and the handleability of the powder can be satisfied at high level. However, the polyvalent metal salts of anionic surfactants are not limited to these.

The crosslinked polymer that can be used for the above purpose is not particularly limited. A crosslinked polymer prepared by polymerizing 30 to 60 percent by weight of methyl methacrylate, 65 to 35 percent by weight an aromatic vinyl monomer, 0.1 to 25 percent by weight of a crosslinkable monomer, and 0 to 30 percent by weight of another copolymerizable monomer can be suitably used from the viewpoint that the quality such as the effect of improving impact resistance and the handleability of the powder can be satisfied at high level. However, the crosslinked polymer is not limited to these.

Examples of the aromatic vinyl monomer include styrene and α-methylstyrene. Examples of the crosslinkable monomer include compounds each having two or more functional groups per molecule such as divinylbenzene, 1,3-butylene glycol dimethacrylate, trimethylolpropane tri(meth)acrylate, allyl (meth)acrylate, ethylene glycol di(meth)acrylate, 1,4-butanediol di(meth)acrylate, 1,6-hexanediol (meth)acrylate, diallyl maleate, diallyl itaconate, triallyl cyanurate, triallyl isocyanurate, diallyl phthalate, and triallyl trimesate. Examples of the other copolymerizable monomer include vinyl cyanides such as acrylonitrile and methacrylonitrile, acrylic acid, methacrylic acid, alkyl esters of acrylic acid, and alkyl esters of methacrylic acid.

The lubricant is not particularly limited. Examples of the lubricant include fatty acids such as stearic acid, 12-hydroxystearic acid, and behenic acid; fatty acid metal salts such as zinc stearate and calcium stearate; fatty acid amides such as oleic amide, ethylenebisamide, and erucic amide; butyl stearate; stearyl stearate; sorbitan stearate such as sorbitan monostearate; pentaerythritol stearate such as pentaerythritol tetrastearate; glycerol esters of fatty acids such as glycerol monobehenate, glycerol mono 12-hydroxystearate, glycerol monostearate, and glycerol monolaurate; fatty acid esters such as hardened castor oil; and higher alcohols such as stearyl alcohol. Among these, glycerol monobehenate, glycerol mono 12-hydroxystearate, pentaerythritol tetrastearate, hardened castor oil, 12-hydroxystearic acid, ethylenebisamide, oleic amide, glycerol monostearate, and glycerol monolaurate are suitably used.

The volume-average particle size of coagulated particles of the graft polymer in the present invention is not particularly limited and may be freely controlled according to the supply form of dried particles, i.e., a product. In general, the volume-average particle size measured with a MICROTRAC FRA-SVRSC (manufactured by NIKKISO Co., Ltd.) is preferably 50 $\mu$m to 5.0 mm and more preferably 75 $\mu$m to 3.0 mm.

According to need, additives such as an antioxidant, a heat stabilizer, an ultraviolet absorber, a pigment, an antistatic agent, and a lubricant may be appropriately added to the coagulated particle composition of the present invention.

The coagulated particle composition according to the present invention can be suitably used as an impact modifier of thermoplastic resins such as vinyl chloride resins, (meth)acrylic resins, styrene resins, carbonate resins, amide resins, ester resins, and olefin resins or thermosetting resins such as phenolic resins, epoxy resins, unsaturated ester resins, urea resins, and melamine resins. In particular, when the coagulated particle composition is used as an impact modifier of vinyl chloride resins, an excellent effect can be exhibited.

EXAMPLES

The present invention will now be described in further detail on the basis of examples, but the present invention is not limited to these examples.

(Blocking resistance)

Dried particles (30 g) (drying condition: 50°C x 12 hours; sieve: 16-mesh pass) of coagulated particles prepared in each example and each comparative example were placed in a cylindrical container with a diameter of 5 cm, and a load of 0.3 kg/cm$^2$ was applied at 60°C. The particles were kept in a thermostatic chamber at 60°C for 2 hours while the load was applied. Subsequently, the particles were left to cool at 25°C for 2 hours while the load was applied to prepare a block. The collapse ratio of the resulting block was measured with a powder tester PT-R (manufactured by Hosokawa Micron Corporation) by applying a vibration for 60 seconds with a vibration strength of 2.2 and an opening of sieve mesh of 750 $\mu$m. The collapse ratio of the block was determined by the following (equation 1):

```
Collapse ratio (%) = [(Wa - Wb)/Wa] × 100 (equation 1)
```

wherein Wa represents the weight of the block before the vibration and Wb represents the weight of the block remaining on the sieve after the vibration.

In the evaluation, a powder having a collapse ratio of 80% or more was evaluated as good, a powder having a collapse ratio of 60% or more and less than 80% was evaluated as fair, a powder having a collapse ratio of 40% or more and less than 60% was evaluated as poor, and a powder having a collapse ratio of less than 40% was evaluated as terrible.

(Flowability indices of powder)

Angle of repose, angle of fall, angle of spatula, aerated bulk density, packed bulk density, cohesion, dispersity, angle of difference, compressibility, and uniformity of dried particles (drying condition: 50°C x 12 hours; sieve: 16-mesh pass) of coagulated particles prepared in each example and each comparative example were measured with a powder tester PT-R (manufactured by Hosokawa Micron Corporation) in accordance with the Carr's method for evaluating flowability (Chemical Engineering, 1965, Vol. 18, pp. 163-168). The degree of flowability was determined from the resulting flowability indices. The degrees of flowability were represented by, in the satisfactory order, excellent, very good, good, fair, poor, not good, and terrible.

(Effect of improving impact resistance)

Dried particles (5.2 parts by weight) of coagulated particles prepared in each example and each comparative example were mixed with tribasic lead sulfate (2 parts by weight), dibasic lead phosphite (2 parts by weight), dibasic lead stearate (0.5 parts by weight), calcium stearate (0.5 parts by weight), and a vinyl chloride resin (average degree of polymerization 1,000) (100 parts by weight) to prepare a vinyl chloride resin composition. Each of the vinyl chloride resin compositions was extruded at 180°C with a compact counter-rotating twin-screw extruder connected to a Labo Plastomill (manufactured by Toyo Seiki Seisaku-Sho, Ltd.) to form a sheet having a width of 7 cm and a thickness of 3 mm. The extruded molding was cut such that a notch was formed in the direction perpendicular to the flowing direction of the extruder. Thus, 10 Charpy test pieces (test piece type 1 (8 cm in length x 1 cm in width, 3 mm in thickness), single notch A (R = 0.25 mm)) were prepared and the Charpy impact strength was evaluated (JIS K-7111).

(Thermal stability)

Dried particles (5.2 parts by weight) of coagulated particles prepared in each example and each comparative example were mixed with tribasic lead sulfate (2 parts by weight), dibasic lead phosphite (2 parts by weight), dibasic lead stearate (0.5 parts by weight), calcium stearate (0.5 parts by weight), and a vinyl chloride resin (average degree of polymerization 1,000) (100 parts by weight) to prepare a vinyl chloride resin composition. Each of the vinyl chloride resin compositions (70 g) was kneaded with a Labo Plastomill (Model 20C200, manufactured by Toyo Seiki Seisaku-Sho, Ltd.) with a rotational speed of the chamber rotor of 60 rpm, at 200°C, and with 3 minutes of preheating time. The time required for the yellowing of the resin was measured.

(Preparation of graft polymer A)

Deionized water (160 parts by weight) and sodium lauryl sulfate (0.043 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of butyl acrylate (hereinafter also referred to as BA) (9.0 parts by weight) and cumene hydroperoxide (0.02 parts by weight) was fed. After 10 minutes, a mixed solution containing disodium ethylenediaminetetraacetate (0.01 parts by weight), ferrous sulfate heptahydrate (0.2 parts by weight), and distilled water (5 parts by weight); and sodium formaldehyde sulfoxylate (0.2 parts by weight) were fed. After the resulting mixture was stirred for 1 hour, a monomeric mixture containing BA (85.5 parts by weight), allyl methacrylate (hereinafter also referred to as AMA) (0.5 parts by weight), and cumene hydroperoxide (0.01 parts by weight) was added dropwise to the mixture over a period of 5 hours. Furthermore, during the addition of the monomeric mixture, an aqueous solution of 5 percent by weight sodium lauryl sulfate, the aqueous solution containing 1 part by weight of sodium lauryl sulfate, was continuously added over a period of 4 hours. After the monomeric mixture was added, stirring was continued for 1.5 hours to prepare an acrylic flexible polymer having a glass transition temperature (hereinafter also referred to as Tg) of -54°C. A mixture containing methyl methacrylate (hereinafter also referred to as MMA) (5.0 parts by weight) and cumene hydroperoxide (0.01 parts by weight), which serve as rigid polymer components, was continuously added to the acrylic flexible polymer at 50°C over a period of 30 minutes. After the addition, cumene hydroperoxide (0.1 parts by weight) was added and stirring was continued for 1 hour to complete polymerization. Thus, a graft polymer A having a volume-average particle size of 0.175 $\mu$m, a polymeric solid content of 35.4 percent by weight, a content of flexible polymer of 95 percent by weight, and a content of rigid polymer (Tg: 105°C) serving as the outermost part of 5 percent by weight was prepared.

(Preparation of graft polymer B)

Deionized water (160 parts by weight) and sodium lauryl sulfate (0.043 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (9.5 parts by weight) and cumene hydroperoxide (0.02 parts by weight) was fed. After 10 minutes, a mixed solution containing disodium ethylenediaminetetraacetate (0.01 parts by weight), ferrous sulfate heptahydrate (0.2 parts by weight), and distilled water (5 parts by weight); and sodium formaldehyde sulfoxylate (0.2 parts by weight) were fed. After the resulting mixture was stirred for 1 hour, a monomeric mixture containing BA (89.5 parts by weight), AMA (0.5 parts by weight), and cumene hydroperoxide (0.01 parts by weight) was added dropwise to the mixture over a period of 5 hours. Furthermore, during the addition of the monomeric mixture, an aqueous solution of 5 percent by weight sodium lauryl sulfate, the aqueous solution containing 1 part by weight of sodium lauryl sulfate, was continuously added over a period of 4 hours. After the monomeric mixture was added, stirring was continued for 1.5 hours to prepare an acrylic flexible polymer having a Tg of -54°C. A mixture containing MMA (0.5 parts by weight) and cumene hydroperoxide (0.001 parts by weight), which serve as rigid polymer components, was continuously added to the acrylic flexible polymer at 50°C over a period of 3 minutes. After the addition, cumene hydroperoxide (0.1 parts by weight) was added and stirring was continued for 1 hour to complete polymerization. Thus, a graft polymer B having a volume-average particle size of 0.175 μm, a polymeric solid content of 35.4 percent by weight, a content of flexible polymer of 99.5 percent by weight, and a content of rigid polymer (Tg: 105°C) serving as the outermost part of 0.5 percent by weight was prepared.

(Preparation of graft polymer C)

Deionized water (160 parts by weight) and sodium lauryl sulfate (0.043 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (8.6 parts by weight) and cumene hydroperoxide (0.02 parts by weight) was fed. After 10 minutes, a mixed solution containing disodium ethylenediaminetetraacetate (0.01 parts by weight), ferrous sulfate heptahydrate (0.2 parts by weight), and distilled water (5 parts by weight); and sodium formaldehyde sulfoxylate (0.2 parts by weight) were fed. After the resulting mixture was stirred for 1 hour, a monomeric mixture containing BA (81.0 parts by weight), AMA (0.4 parts by weight), and cumene hydroperoxide (0.01 parts by weight) was added dropwise to the mixture over a period of 5 hours. Furthermore, during the addition of the monomeric mixture, an aqueous solution of 5 percent by weight sodium lauryl sulfate, the aqueous solution containing 1 part by weight of sodium lauryl sulfate, was continuously added over a period of 4 hours. After the monomeric mixture was added, stirring was continued for 1.5 hours to prepare an acrylic flexible polymer having a Tg of -54°C. A mixture containing MMA (10 parts by weight) and cumene hydroperoxide (0.02 parts by weight), which serve as rigid polymer components, was continuously added to the acrylic flexible polymer at 50°C over a period of 45 minutes. After the addition, cumene hydroperoxide (0.1 parts by weight) was added and stirring was continued for 1 hour to complete polymerization. Thus, a graft polymer C having a volume-average particle size of 0.175 μm, a polymeric solid content of 35.4 percent by weight, a content of flexible polymer of 90 percent by weight, and a content of rigid polymer (Tg: 105°C) serving as the outermost part of 10 percent by weight was prepared.

(Preparation of graft polymer D)

Deionized water (200 parts by weight), sodium soap produced from beef tallow (2 parts by weight), ferrous sulfate (0.002 parts by weight), disodium ethylenediaminetetraacetate (0.005 parts by weight), potassium tertiary phosphate (0.2 parts by weight), sodium formaldehyde sulfoxylate (0.2 parts by weight), butadiene (80 parts by weight), styrene (20 parts by weight), and diisopropylbenzene hydroperoxide (0.1 parts by weight) were fed in a pressure-resistant polymerization container equipped with a stirrer, and polymerization was performed at 40°C for 15 hours. Thus, a diene flexible polymer with a rate of polymerization conversion of 99% was prepared. The resulting flexible polymer latex (272 parts by weight) (solid content: 90 parts by weight) having a Tg of -69°C, water (25 parts by weight), sodium soap produced from beef tallow (0.2 parts by weight), ferrous sulfate (0.002 parts by weight), disodium ethylenediaminetetraacetate (0.004 parts by weight), sodium formaldehyde sulfoxylate (0.1 parts by weight), methyl methacrylate (5.0 parts by weight), and styrene (5.0 parts by weight) were fed in a polymerization container equipped with a stirrer, and polymerization was performed at 60°C for 4 hours. Thus, a graft polymer D having a polymeric solid content of 36 percent by weight, a content of flexible polymer of 90 percent by weight, and a content of rigid polymer (Tg: 105°C) serving as the outermost part of 10 percent by weight was produced.

(Preparation of graft polymer E)

Deionized water (160 parts by weight) and sodium lauryl sulfate (0.043 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (8.1 parts by weight) and cumene hydroperoxide (0.02 parts by weight) was fed. After 10 minutes, a mixed solution containing disodium ethylenediaminetetraacetate (0.01 parts by weight), ferrous sulfate heptahydrate (0.2 parts by weight), and distilled water (5 parts by weight); and sodium formaldehyde sulfoxylate (0.2 parts by weight) were fed. After the resulting mixture was stirred for 1 hour, a monomeric mixture containing BA (76.5 parts by weight), AMA (0.4 parts by weight), and cumene hydroperoxide (0.01 parts by weight) was added dropwise to the mixture over a period of 5 hours. Furthermore, during the addition of the monomeric mixture, an aqueous solution of 5 percent by weight sodium lauryl sulfate, the aqueous solution containing 1 part by weight of sodium lauryl sulfate, was continuously added over a period of 4 hours. After the monomeric mixture was added, stirring was continued for 1.5 hours to prepare an acrylic flexible polymer having a Tg of -54°C. A mixture containing MMA (15 parts by weight) and cumene hydroperoxide (0.03 parts by weight), which serve as rigid polymer components, was continuously added to the acrylic flexible polymer at 50°C over a period of 60 minutes. After the addition, cumene hydroperoxide (0.1 parts by weight) was added and stirring was continued for 1 hour to complete polymerization. Thus, a graft polymer E having a volume-average particle size of 0.175 $\mu$m, a polymeric solid content of 35.4 percent by weight, a content of flexible polymer of 85 percent by weight, and a content of rigid polymer (Tg: 105°C) serving as the outermost part of 15 percent by weight was prepared.

(Preparation of graft polymer F)

Deionized water (160 parts by weight) and sodium lauryl sulfate (0.043 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (9.5 parts by weight) and cumene hydroperoxide (0.02 parts by weight) was fed. After 10 minutes, a mixed solution containing disodium ethylenediaminetetraacetate (0.01 parts by weight), ferrous sulfate heptahydrate (0.2 parts by weight), and distilled water (5 parts by weight); and sodium formaldehyde sulfoxylate (0.2 parts by weight) were fed. After the resulting mixture was stirred for 1 hour, a monomeric mixture containing BA (90.0 parts by weight), AMA (0.5 parts by weight), and cumene hydroperoxide (0.01 parts by weight) was added dropwise to the mixture over a period of 5 hours. Furthermore, during the addition of the monomeric mixture, an aqueous solution of 5 percent by weight sodium lauryl sulfate, the aqueous solution containing 1 part by weight of sodium lauryl sulfate, was continuously added over a period of 4 hours. After the monomeric mixture was added, stirring was continued for 1.5 hours to complete polymerization. Thus, a flexible polymer F (Tg: -54°C) having a volume-average particle size of 0.175$\mu$ m, a polymeric solid content of 35.4 percent by weight, and a content of flexible polymer of 100 percent by weight was prepared.

(Preparation of crosslinked polymer)

Deionized water (200 parts by weight), sodium oleate (0.5 parts by weight), ferrous sulfate (0.002 parts by weight), disodium ethylenediaminetetraacetate (0.005 parts by weight), and sodium formaldehyde sulfoxylate (0.2 parts by weight) were fed in a polymerization container equipped with a stirrer and the mixture was heated to 60°C. Subsequently, a mixed solution containing methyl methacrylate (55 percent by weight), styrene (40 percent by weight), 1,3-butyleneglycol dimethacrylate (5 percent by weight) (total 100 parts by weight of monomers), and cumene hydroperoxide (0.3 parts by weight) was continuously added over a period of 7 hours. During the addition, sodium oleate (0.5 parts by weight each) was added after 2, 4, and 6 hours from the start of the addition of the mixed solution. After the completion of the addition of the monomeric mixed solution, postpolymerization was performed for 2 hours. Thus, a crosslinked polymer latex with a rate of polymerization conversion of 99% and a polymeric solid content of 33 percent by weight was prepared.

(EXAMPLE 1)

An aqueous solution of sodium alginate (ALGITEX LL, manufactured by Kimica Corporation) (having an aqueous solution viscosity of 120 mPa·s measured with a B-type viscometer) with a concentration of 1.5 percent by weight was added to a latex of the graft polymer A (polymeric solid content: 100 parts by weight) so that the solid content of sodium alginate was 0.4 parts by weight relative to 100 parts by weight of the graft polymer A. The mixture was stirred for 3 minutes to prepare a mixed latex. The mixed latex at 5°C was sprayed into droplets so as to have a volume-average droplet size of about 200 $\mu$m in a cylindrical apparatus having a diameter of 60 cm with a spiral flow-type cone nozzle, which is one of pressure nozzles. A nozzle diameter of 0.6 mm was used and the spraying pressure was 3.7 kg/cm$^2$.

The spray was performed at a height of 5 m from the liquid level at the bottom of the tower. At the same time, an aqueous solution of calcium chloride with a concentration of 30 percent by weight was sprayed into droplets each having a droplet size of 0.1 to 10 μm using a two-fluid nozzle while the aqueous solution was mixed with air so that the solid content of calcium chloride was 5 to 15 parts by weight relative to 100 parts by weight of the graft polymer A. The droplets of the mixed latex dropped into the tower were fed in a receiving tank at the bottom of the tower, the tank containing an aqueous solution of calcium chloride at 5°C with a concentration of 1.0 percent by weight, and were then recovered.

An aqueous solution of potassium palmitate with a concentration of 5 percent by weight was added to the resulting aqueous solution of coagulated latex particles so that the solid content of potassium palmitate was 1.5 parts by weight relative to 100 parts by weight of the solid content of the graft polymer A. The mixture was heated at 70°C with stirring to perform a heat treatment. Subsequently, the mixture was dehydrated and dried (50°C x 12 hours) to recover a coagulated particle composition.

(EXAMPLE 2)

The process was performed as in Example 1 except that a latex of the graft polymer B was used and droplets of the mixed latex were fed in a receiving tank containing an aqueous solution of calcium chloride at 1°C with a concentration of 1.0 percent by weight, the tank being disposed at the bottom of the tower. Secondary aggregation between coagulated latex particles was generated in the receiving tank. However, potassium palmitate was added and a vigorous stirring was then performed, thereby a coagulated particle composition passing through the 16-mesh sieve was obtained.

(EXAMPLE 3)

The process was performed as in Example 1 except that a latex of the graft polymer C was used and droplets of the mixed latex were fed in a receiving tank containing an aqueous solution of calcium chloride at 20°C with a concentration of 1.0 percent by weight, the tank being disposed at the bottom of the tower.

(EXAMPLE 4)

The process was performed as in Example 1 except that the amount of sodium alginate was 0.01 parts by weight.

(EXAMPLE 5)

The process was performed as in Example 1 except that the amount of sodium alginate was 0.7 parts by weight and the amount of potassium palmitate was 1.0 part by weight.

(EXAMPLE 6)

The process was performed as in Example 1 except that the amount of sodium alginate was 1.8 parts by weight and the amount of potassium palmitate was 0.1 parts by weight.

(EXAMPLE 7)

The process was performed as in Example 1 except the following: In place of the aqueous solution of sodium alginate with a concentration of 1.5 percent by weight, an aqueous solution of hydroxypropylmethylcellulose (60SH-4000, manufactured by Shin-Etsu Chemical Co., Ltd.) (having an aqueous solution viscosity of 4,000 mPa·s measured with a B-type viscometer) with a concentration of 2.0 percent by weight was added so that the solid content of hydroxypropylmethylcellulose was 0.4 parts by weight relative to 100 parts by weight of the solid content of the graft polymer A.

(EXAMPLE 8)

The process was performed as in Example 1 except that, in place of 1.5 parts by weight of potassium palmitate, the crosslinked polymer was added so that the solid content of the crosslinked polymer was 1.0 part by weight relative to 100 parts by weight of the solid content of the graft polymer A.

(EXAMPLE 9)

An aqueous solution of sodium alginate (ALGITEX LL, manufactured by Kimica Corporation) (having an aqueous solution viscosity of 120 mPa·s measured with a B-type viscometer) with a concentration of 1.5 percent by weight was added to a latex of the graft polymer D (polymeric solid content: 100 parts by weight) so that the solid content of sodium alginate was 0.4 parts by weight relative to 100 parts by weight of the solid content of the graft polymer D. The mixture was stirred for 3 minutes to prepare a mixed latex. The mixed latex at 25°C was sprayed into droplets so as to have a volume-average droplet size of 200 $\mu$m in an atmosphere containing 0.01 to 0.8 volume percent of hydrogen chloride gas in a cylindrical apparatus having a diameter of 60 cm with a spiral flow-type cone nozzle, which is one of pressure nozzles. A nozzle diameter of 0.6 mm was used and the spraying pressure was 3.7 kg/cm$^2$. The spray was performed at a height of 5 m from the liquid level at the bottom of the tower. The droplets of the mixed latex dropped into the tower were fed in a receiving tank at the bottom of the tower, the tank containing an aqueous solution of hydrochloric acid at 50°C with a pH of 2.0, and were then recovered.

The crosslinked polymer latex (3.0 parts by weight) (solid content: 1.0 part by weight) was added to the resulting aqueous solution of coagulated latex particles (solid content of the graft polymer D: 100 parts by weight) with stirring. Subsequently, 25 percent by weight of sodium hydroxide was added to control the pH of the slurry to 4.0. A heat treatment was then performed at 95°C for 15 minutes. The slurry was then dehydrated and dried (50°C x 12 hours) to recover the coagulated latex particles.

(EXAMPLE 10)

The process was performed as in Example 1 except that the amount of potassium palmitate was 0.2 parts by weight.

(EXAMPLE 11)

The process was performed as in Example 1 except that the amount of sodium alginate was 2.0 parts by weight and no potassium palmitate was added.

(COMPARATIVE EXAMPLE 1)

The process was performed as in Example 1 except that a latex of the graft polymer E was used and droplets of the mixed latex were fed in a receiving tank containing an aqueous solution of calcium chloride at 30°C with a concentration of 1.0 percent by weight, the tank being disposed at the bottom of the tower.

(COMPARATIVE EXAMPLE 2)

The process was performed as in Example 1 except that a latex of the graft polymer F was used and droplets of the mixed latex were fed in a receiving tank containing an aqueous solution of calcium chloride at 1°C with a concentration of 1.0 percent by weight, the tank being disposed at the bottom of the tower. Secondary aggregation between coagulated latex particles was generated in the receiving tank. However, potassium palmitate was added and a vigorous stirring was then performed, thereby coagulated particles passing through the 16-mesh sieve was obtained.

(COMPARATIVE EXAMPLE 3)

The process was performed as in Example 1 except that the amount of sodium alginate was 4.0 parts by weight and no potassium palmitate was added.

(COMPARATIVE EXAMPLE 4)

The process was performed as in Example 1 except that the amount of sodium alginate was 0.005 parts by weight.

(COMPARATIVE EXAMPLE 5)

The process was performed as in Example 1 except that the no sodium alginate was added.
Table 1 shows the type of graft polymer, the ratio by weight of flexible polymer/ rigid polymer serving as the outermost part, the type of water-soluble polymer compound having the physical gel-forming property (the type of water-soluble polymer), the content of water-soluble polymer compound having the physical gel-forming property (the content of water-soluble polymer), the type of anti-blocking agent, the content of anti-blocking agent, and the total amount of water-soluble polymer compound having the physical gel-forming property and anti-blocking agent (the total amount of water-soluble polymer and anti-blocking agent) in coagulated particle compositions produced in the examples and the comparative examples. [Table 1]

| | Type of graft polymer | Flexible polymer/ Rigid polymer (Ratio by weight) | Type of water-soluble polymer | Content of water-soluble polymer (Parts by weight) | Type of anti-blocking agent | Content of anti-blocking agent (Parts by weight) | Total amount of water-soluble polymer and anti-blocking agent (Parts by weight) |
|---|---|---|---|---|---|---|---|
| Example 1 | A | 95/5 | Sodium alginate | 0.4 | Potassium palmitate | 1.5 | 1.9 |
| Example 2 | B | 99.5/0.5 | Sodium alginate | 0.4 | Potassium palmitate | 1.5 | 1.9 |
| Example 3 | C | 90/10 | Sodium alginate | 0.4 | Potassium palmitate | 1.5 | 1.9 |
| Example 4 | A | 95/5 | Sodium alginate | 0.01 | Potassium palmitate | 1.5 | 1.51 |
| Example 5 | A | 95/5 | Sodium alginate | 0.7 | Potassium palmitate | 1.0 | 1.7 |
| Example 6 | A | 95/5 | Sodium alginate | 1.8 | Potassium palmitate | 0.1 | 1.9 |
| Example 7 | A | 95/5 | Cellulose-base | 0.4 | Potassium palmitate | 1.5 | 1.9 |
| Example 8 | A | 95/5 | Sodium alginate | 0.4 | Crosslinked polymer | 1.0 | 1.4 |
| Example 9 | D | 90/10 | Sodium alginate | 0.4 | Crosslinked polymer | 1.0 | 1.4 |
| Example 10 | A | 95/5 | Sodium alginate | 0.4 | Potassium palmitate | 0.2 | 0.6 |
| Example 11 | A | 95/5 | Sodium alginate | 2.0 | - | - | 2.0 |
| Comparative Example 1 | E | 85/15 | Sodium alginate | 0.4 | Potassium palmitate | 1.5 | 1.9 |
| Comparative Example 2 | F | 100/0 | Sodium alginate | 0.4 | Potassium palmitate | 1.5 | 1.9 |
| Comparative Example 3 | A | 95/5 | Sodium alginate | 4.0 | - | - | 4.0 |
| Comparative Example 4 | A | 95/5 | Sodium alginate | 0.005 | Potassium palmitate | 1.5 | 1.505 |
| Comparative Example 5 | A | 95/5 | - | - | Potassium palmitate | 1.5 | 1.5 |

Table 2 shows the evaluation results of blocking resistance, the degree of powder flowability, impact resistance strength (Charpy impact strength), and thermal stability of coagulated particle compositions produced in the examples and the comparative examples.

[Table 2]

| | Blocking resistance | Flowability indices of powder | Charpy impact strength (J/m$^2$) | Thermal stability Yellowing time (min) |
|---|---|---|---|---|
| Example 1 | Good | Very good | 12.3 | 7 |
| Example 2 | Good | Very good | 12.0 | 7 |
| Example 3 | Good | Good | 11.5 | 7 |
| Example 4 | Good | Very good | 12.4 | 7 |
| Example 5 | Good | Very good | 12.7 | 7 |
| Example 6 | Good | Very good | 11.7 | 7 |
| Example 7 | Good | Very good | 12.1 | 7 |
| Example 8 | Good | Very good | 12.7 | 7 |
| Example 9 | Good | Very good | 12.2 | 7 |
| Example 10 | Fair | Fair | 13.1 | 7 |
| Example 11 | Fair | Fair | 11.7 | 6 |
| Comparative Example 1 | Fair | Good | 9.4 | 7 |
| Comparative Example 2 | Terrible | Poor | 10.5 | 7 |
| Comparative Example 3 | Good | Fair | 9.7 | 5 |
| Comparative Example 4 | Fair | Poor | 12.4 | 7 |
| Comparative Example 5 | Fair | Poor | 11.7 | 7 |

Referring to Examples 1, 2, and 3 and Comparative Examples 1 and 2, when the ratio by weight of flexible polymer/ rigid polymer in the graft polymer (A) is in a range of 90/10 to 99.5/0.5 (that is, the rigid polymer serving as the outermost part in the graft polymer (A) is in a range of 0.5 to 10 percent by weight), coagulated particle compositions having satisfactory quality such as the effect of improving impact resistance or the like and the handleability of the powder can be produced.

Referring to the examples and the comparative examples, when 0.01 to 3.0 parts by weight of the water-soluble polymer compound (B) having the physical gel-forming property is contained in 100 parts by weight of the graft polymer (A), coagulated particle compositions having satisfactory quality such as the effect of improving impact resistance or the like and the handleability of the powder can be produced.

Furthermore, referring to the examples and the comparative examples, when the content of the water-soluble polymer compound (B) having the physical gel-forming property, the content of the anti-blocking agent (D), and the total amount of these are within the ranges specified in the present invention, coagulated particle compositions that can satisfy the quality such as the effect of improving impact resistance or the like and the handleability of the powder at high level can be produced.

**Claims**

1. A coagulated particle composition comprising:

   a graft polymer (A) containing at least one flexible polymer phase and at least one rigid polymer phase, wherein the outermost part of the graft polymer (A) includes the rigid polymer phase;
   a water-soluble polymer compound (B) having a physical gel-forming property; and
   a gelling agent (C) therefor,
   wherein the content of the water-soluble polymer compound (B) having the physical gel-forming property is 0.01 to 3.0 parts by weight relative to 100 parts by weight of the graft polymer (A) and
the content of the rigid polymer phase serving as the outermost part in the graft polymer (A) is 0.5 to 10 percent by weight.

2.  The coagulated particle composition according to claim 1, further comprising 0.05 to 3.0 parts by weight of an anti-blocking agent (D) relative to 100 parts by weight of the graft polymer (A).

3.  The coagulated particle composition according to claim 1 or claim 2, wherein the content of the water-soluble polymer compound (B) having the physical gel-forming property is 0.05 to 1.8 parts by weight relative to 100 parts by weight of the graft polymer (A).

4.  The coagulated particle composition according to claim 2 or claim 3, wherein the total content of the water-soluble polymer compound (B) having the physical gel-forming property and the anti-blocking agent (D) is 0.1 to 3.0 parts by weight relative to 100 parts by weight of the graft polymer (A).

5.  The coagulated particle composition according to any one of claims 2 to 4, wherein the total content of the water-soluble polymer compound (B) having the physical gel-forming property and the anti-blocking agent (D) is 0.5 to 2.0 parts by weight relative to 100 parts by weight of the graft polymer (A).

6.  The coagulated particle composition according to any one of claims 1 to 5, wherein the water-soluble polymer compound (B) having the physical gel-forming property is at least one compound selected from hydroxyethylmethylcellulose, hydroxypropylmethylcellulose, carboxymethylcellulose, water-soluble alginic acid derivatives, agar, gelatin, carrageenan, glucomannan, pectin, curdlan, gellan gum, and polyacrylic acid derivatives.

7.  The coagulated particle composition according to any one of claims 2 to 6, wherein the anti-blocking agent (D) is a polyvalent metal salt of an anionic surfactant.

8.  The coagulated particle composition according to any one of claims 2 to 6, wherein the anti-blocking agent (D) comprises 10 to 100 percent by weight of a crosslinked polymer prepared by polymerizing 30 to 60 percent by weight of methyl methacrylate, 65 to 35 percent by weight an aromatic vinyl monomer, 0.1 to 25 percent by weight of a crosslinkable monomer, and 0 to 30 percent by weight of another copolymerizable monomer and 0 to 90 percent by weight of a lubricant.

9.  The coagulated particle composition according to claim 6, wherein the water-soluble polymer compound (B) having the physical gel-forming property is a water-soluble alginic acid derivative.

10. The coagulated particle composition according to any one of claims 1 to 9, wherein the gelling agent (C) is an inorganic salt and/or an acid.

11. The coagulated particle composition according to any one of claims 1 to 10, wherein the graft polymer (A) comprises a flexible polymer phase serving as an inner layer and a rigid polymer phase serving as an outer layer.

12. The coagulated particle composition according to any one of claims 1 to 10, wherein the graft polymer (A) comprises a rigid polymer phase serving as the innermost layer, a flexible polymer phase serving as an interlayer, and a rigid polymer phase serving as the outermost layer.

13. The coagulated particle composition according to any one of claims 1 to 12, wherein the flexible polymer phase in the graft polymer (A) is a flexible polymer phase prepared by polymerizing 50 to 100 percent by weight of an acrylate ester, 0 to 40 percent by weight of an aromatic vinyl monomer, 0 to 10 percent by weight of a vinyl monomer copolymerizable with the acrylate ester and the aromatic vinyl monomer, and 0 to 5 percent by weight of a multifunctional monomer, the flexible polymer phase having a volume-average particle size of 0.01 to 15.0 $\mu$m and a glass transition temperature of lower than 20°C.

14. The coagulated particle composition according to any one of claims 1 to 12, wherein the flexible polymer phase in the graft polymer (A) is a flexible polymer phase prepared by polymerizing 50 to 100 percent by weight of butadiene, 0 to 40 percent by weight of an aromatic vinyl monomer, 0 to 10 percent by weight of a vinyl monomer copolymerizable with butadiene and the aromatic vinyl monomer, and 0 to 5 percent by weight of a multifunctional monomer, the flexible polymer phase having a volume-average particle size of 0.01 to 15.0 $\mu$m and a glass transition temperature of lower than 20°C.

15. The coagulated particle composition according to any one of claims 1 to 14, wherein the rigid polymer phase serving as the outermost part in the graft polymer (A) is a rigid polymer phase prepared by polymerizing a monomeric mixture containing 0 to 100 percent by weight of a (meth)acrylate ester, 0 to 90 percent by weight of an aromatic vinyl monomer, 0 to 25 percent by weight of a vinyl cyanide monomer, and 0 to 20 percent by weight of a vinyl monomer copolymerizable with the (meth)acrylate ester, the aromatic vinyl monomer, and the vinyl cyanide monomer, the rigid polymer phase having a glass transition temperature of 20°C or higher.

## INTERNATIONAL SEARCH REPORT

| | International application No. |
|---|---|
| | PCT/JP2005/022817 |

A. CLASSIFICATION OF SUBJECT MATTER
*C08L51/00*(2006.01)

According to International Patent Classification (IPC) or to both national classification and IPC

B. FIELDS SEARCHED

Minimum documentation searched (classification system followed by classification symbols)
*C08L51/00*(2006.01)

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-138210 A  (Rohm and Haas Co.), 14 May, 2002 (14.05.02), Full text & EP 1186636 A1 & US 2002-045680 A1 | 1-15 |
| P,X | JP 2005-162797 A  (Daicel Chemical Industries, Ltd.), 23 June, 2005 (23.06.05), Full text & WO 2005/052034 A1 | 1-15 |
| X | WO 99/55779 A1  (KANEKA Corp.), 04 November, 1999 (04.11.99), & EP 992540 A1 & US 6218447 B1 | 1-15 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 March, 2006 (06.03.06) | 20 March, 2006 (20.03.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

**Patent documents cited in the description**

- JP 3919035 B
- JP 4222541 B
- JP 2001763 A
- JP 8100095 A

- JP 52037987 A
- JP 2002363372 A
- JP 2003119396 A
- JP 9286830 A

**Non-patent literature cited in the description**

- Polymer Handbook. J. Brandrup Interscience, 1989

- *Chemical Engineering,* 1965, vol. 18, 163-168